# EUROPEAN PATENT APPLICATION

(11) **EP 4 776 683 A1**
(43) Date of publication of application: **15.07.2026**
(21) Application number: 26150819.6
(22) Date of filing: 08.01.2026
(51) Int. Cl.: H04W 24/10, H04W 84/12, H04B 17/309

(54) **METHOD, DEVICE AND APPARATUS FOR COMMUNICATION AND COMPUTER READABLE STORAGE MEDIUM**

(30) Priority: 09.01.2025 CN 202510042370
(71) Applicant: Nokia Solutions and Networks Oy, 02610 Espoo (FI)
(72) Inventor: HUANG, Kai Kai, Shanghai, 201201 (CN); CHENG, Gang, Shanghai, 201206 (CN); JIANG, Yi Ming, Shanghai, 200136 (CN); MUTGAN, Orhan Okan, 81539 Munich (DE); LUO, Ye, Shanghai (CN)
(74) Representative: DREISS Patentanwälte PartG mbB

(57) **Abstract**

Example embodiments of the present disclosure are directed to a device, method, apparatus for communication, and computer-readable storage medium. A method for communication includes: transmitting, by a first device to a second device, a request for channel measurement coordination, the request at least indicating that the first device expects to perform coordinated channel measurement for a plurality of channels associated with a target bandwidth within a target time period; based on receiving, from the second device, a response to the request indicating that the coordinated channel measurement can be performed within the target time period, triggering the coordinated channel measurement for the plurality of channels to be performed by at least the first device and the second device; and exchanging a result of the coordinated channel measurement with the second device.

## Description

### FIELD

Example embodiments of the present disclosure relate to the field of communications technologies, and in particular, to a network device, a method, an apparatus, and a computer-readable storage medium.

### BACKGROUND ART

Wireless channels are the basis for system design, network optimization, and performance evaluation. Channel measurement is a direct approach to researching wireless channels in new frequency bands and scenarios. Through channel measurement, massive channel measurement data can be obtained, and the measurement data is then processed by high-precision multipath parameter estimation algorithms, to extract channel parameters, thereby enabling in-deep study and analysis of channel characteristics.

### SUMMARY

In a first aspect of the present disclosure, a method for communication is provided. The method includes transmitting, by a first device, to a second device, a request for channel measurement coordination, the request at least indicating that the first device expects to perform coordinated channel measurement for a plurality of channels associated with a target bandwidth within a target time period; based on receiving, from the second device, a response to the request indicating that the coordinated channel measurement can be performed within the target time period, triggering the coordinated channel measurement for the plurality of channels to be performed by at least the first device and the second device; and exchanging a result of the coordinated channel measurement with the second device.

In a second aspect of the present disclosure, a method for communication is provided. The method includes receiving, by a second device, from a first device, a request for channel measurement coordination, the request at least indicating that the first device expects to perform coordinated channel measurement for a plurality of channels associated with a target bandwidth within a target time period; transmitting a response to the request to the first device, the response indicating that the coordinated channel measurement can be performed within the target time period; performing the coordinated channel measurement within the target time period based on determining that the coordinated channel measurement for the plurality of channels to be performed by at least the first device and the second device is triggered; and exchanging a result of the coordinated channel measurement with the first device.

In a third aspect of the present disclosure, a device for communication is provided. The device includes at least one processor; and at least one memory coupled with the at least one processor, the at least one memory including instructions stored thereon, the at least one memory and the instructions further configured to, with the at least one processor, cause the device to perform: transmitting, to the second device, a request for channel measurement coordination, the request at least indicating that the first device expects to perform coordinated channel measurement for a plurality of channels associated with a target bandwidth within a target time period; based on receiving, from the second device, a response to the request indicating that the coordinated channel measurement can be performed within the target time period, triggering the coordinated channel measurement for the plurality of channels to be performed by at least the first device and the second device; and exchanging a result of the coordinated channel measurement with the second device.

In a fourth aspect of the present disclosure, a device for communication is provided. The device includes at least one processor; and at least one memory coupled with the at least one processor, the at least one memory including instructions stored thereon, the at least one memory and the instructions further configured to, with the at least one processor, cause the device to perform: receiving, from a first device, a request for channel measurement coordination, the request at least indicating that the first device expects to perform coordinated channel measurement for a plurality of channels associated with a target bandwidth within a target time period; transmitting a response to the request to the first device, the response indicating that the coordinated channel measurement can be performed within the target time period; performing the coordinated channel measurement within the target time period based on determining that the coordinated channel measurement for the plurality of channels to be performed by at least the first device and the second device is triggered; and exchanging a result of the coordinated channel measurement with the first device.

In a fifth aspect of the present disclosure, an apparatus for communication is provided. The apparatus includes means for transmitting, to a second device, a request for channel measurement coordination, the request at least indicating that the first device expects to perform coordinated channel measurement for a plurality of channels associated with a target bandwidth within a target time period; means for triggering the coordinated channel measurement for the plurality of channels to be performed by at least the first device and the second device based on receiving, from the second device, a response to the request indicating that the coordinated channel measurement can be performed within the target time period; and means for exchanging a result of the coordinated channel measurement with the second device.

In a sixth aspect of the present disclosure, an apparatus for communication is provided. The apparatus includes means for receiving, from a first device, a request for channel measurement coordination, the request at least indicating that the first device expects to perform coordinated channel measurement for a plurality of channels associated with a target bandwidth within a target time period; means for transmitting a response to the request to the first device, the response indicating that the coordinated channel measurement can be performed within the target time period; means for performing the coordinated channel measurement within the target time period based on determining that the coordinated channel measurement for the plurality of channels to be performed by at least the first device and the second device is triggered; and means for exchanging a result of the coordinated channel measurement with the first device.

In a seventh aspect of the present disclosure, a computer-readable storage medium is provided. The computer-readable storage medium has a computer program stored thereon, and the computer program includes instructions that, when executed by a processor on a device, cause the device to perform the method according to the first aspect or the second aspect.

It should be understood that the content described in the summary section is not intended to limit the key or critical features of the embodiments of the present disclosure, nor is it intended to limit the scope of the present disclosure. Other features of the present disclosure will become readily understood from the following description.

### BRIEF DESCRIPTION OF DRAWINGS

Example embodiments of the present disclosure are presented by way of example, and their advantages are explained in more detail below with reference to the accompanying drawings, in which:
FIG. 1 illustrates a schematic diagram of an environment in which example embodiments described herein may be implemented;
FIG. 2 illustrates a schematic diagram of a communication process according to some example embodiments of the present disclosure;
FIG. 3A to FIG. 3H are schematic diagrams of frame formats according to some example embodiments of the present disclosure;
FIG. 4A to FIG. 4B illustrate measurement scenarios according to some example embodiments of the present disclosure;
FIG. 5 illustrates a flowchart of a method for communication according to some example embodiments of the present disclosure;
FIG. 6 illustrates a flowchart of a method for communication according to some example embodiments of the present disclosure;
FIG. 7 illustrates a simplified block diagram of a device suitable for implementing example embodiments of the present disclosure; and
FIG. 8 illustrates a schematic diagram of a computer-readable medium according to some example embodiments of the present disclosure.

Throughout the drawings, the same or similar reference signs refer to the same or similar elements.

### DETAILED DESCRIPTION

The principles of the present disclosure will be described below with reference to several example embodiments shown in the accompanying drawings. It should be understood that these specific example embodiments are described merely to enable those skilled in the art to better understand and implement the present disclosure, and are not intended to limit the scope of the present disclosure in any way.

As used herein, the term "comprising" and the like should be construed as an open-ended inclusion, i.e., "including but not limited to". The term "based on" should be construed as "based at least in part on". The terms "one embodiment" or "the embodiment" should be construed as "at least one embodiment". The terms "first," "second," and the like may refer to different or identical objects. Other explicit and implicit definitions may also be included below.

As used herein, the term "determining" encompasses a wide variety of actions. For example, "determining" may include computing, calculating, processing, deriving, investigating, looking up (e.g., looking up in a table, database, or another data structure), ascertaining, and the like. In addition, "determining" may include receiving (e.g., receiving information), accessing (e.g., accessing data in a memory), and/or the like. Further, "determining" may include parsing, selecting, choosing, establishing, and the like.

Herein, unless explicitly stated otherwise, performing a step "in response to A" does not imply that this step is performed immediately after "A"; instead, it may include one or more intermediate steps.

The term "circuit device" as used herein refers to one or more of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and; (c) hardware circuit(s) and or processor(s), such as a microprocessor(s) or a portion of a microprocessor(s), that requires software (e.g., firmware) for operation, but the software may not be present when it is not needed for operation.

The definition of the circuit device applies to all use scenarios of this term in the present application, including any claims. As another example, the term "circuit device" as used herein also covers implementations of only hardware circuit or processor (or multiple processors), or a portion of a hardware circuit or processor, or an its accompanying software or firmware. For example, if applicable to a particular claim element, the term "circuitry" also covers a baseband integrated circuit or a processor integrated circuit, or OLT or similar integrated circuits in other computing devices.

As used herein, the term "communication network" refers to a network that follows any suitable communication standard, such as New Radio (NR), Long Term Evolution (LTE), LTE-Advanced (LTE-A), Wideband Code Division Multiple Access (WCDMA), High Speed Packet Access (HSPA), Narrowband Internet of Things (NB-IoT), and the like. Further, communications between a terminal device and the network devices in the communication network may be performed according to any suitable generation of communication protocols including, but not limited to, first generation (1G), second generation (2G), 2.5G, 2.75G, third generation (3G), fourth generation (4G), 4.5G, fifth generation (5G), sixth generation (6G) communication protocol, and/or any other protocol currently known or to be developed in the future. Example embodiments of the present disclosure may be applied to various communication systems, including, but not limited to, terrestrial communication systems, non-terrestrial communication systems, or combinations thereof. Considering the rapid development in the communication field, it will certainly be the case that future types of communication technologies and systems can be used to implement the present disclosure. It should not be construed as limiting the scope of the present disclosure to only the foregoing systems.

As used herein, the term "network device" refers to a node in a communication network through which a terminal device accesses a network and receives service therefrom. Depending on the terminology and technologies applied, a network device may refer to a base station (BS) or an access point (AP), such as a NodeB (NB), an evolved NodeB (eNodeB or eNB), an NR NB (also referred to as a gNB), a remote radio unit (RRU), a radio head (RH), a remote radio head (RRH), a relay, an integrated access and backhaul (IAB) node, a low-power node such as a femto, pico, or the like.

As used herein, the term "terminal device" refers to any terminal device capable of wireless communication. By way of example and not limitation, a terminal device may also be referred to as a network device, a user equipment (UE), a subscriber station (SS), a portable subscriber station, a mobile station (MS), or an access terminal (AT). A terminal device may include, but is not limited to, a mobile phone, a cellular phone, a smart phone, a voice-over-IP (VoIP) phone, a wireless local loop phone, a tablet computer, a wearable terminal device, a personal digital assistant (PDA), a portable computer, a desktop computer, an image capture terminal device such as, for example, a digital camera, a gaming terminal device, a music storage and playback device, a vehicle mounted wireless terminal device, a wireless endpoint, a mobile station, a laptop embedded equipment (LEE), a laptop-mounted equipment (LME), a universal serial bus (USB) dongle, a smart device, a wireless customer premises equipment (CPE), an Internet of Things (IoT) device, a watch or other wearable device, a head-mounted display (HMD), a vehicle, a drone, a medical device and an application (e.g., a remote surgery), an industrial device and an application (e.g., a robot and/or other wireless device operating in an industrial and/or automated processing chain environment), a consumer electronic device, a device operating on a commercial and/or industrial wireless network, and the like. The terminal device may correspond to a mobile terminal (MT) portion (e.g., a relay node) of the IAB node. In the following description, the terms "terminal device", "network device", "terminal", "user equipment", and "UE" may be used interchangeably.

As used herein, the term "circuitry" refers to one or more of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

The definition of the circuitry applies to all use scenarios of this term in the present application, including any claims. As another example, the term "circuitry" as used herein also covers implementations of only hardware circuit or processor (or multiple processors), or a portion of a hardware circuit or processor, or an its accompanying software or firmware. For example, if applicable to a particular claim element, the term "circuitry" also covers a baseband integrated circuit or a processor integrated circuit, or OLT or similar integrated circuits in other computing devices.

As already mentioned above, wireless channels are the basis for system design, network optimization, and performance evaluation. Channel measurement is a direct approach to researching wireless channels in new frequency bands and scenarios. Through channel measurement, massive channel measurement data can be obtained. The measurement data is processed by high-precision multipath parameter estimation algorithms, to extract channel parameters, thereby enabling in-deep study and analysis of channel characteristics.

Today, low latency and reliability are the primary metrics and requirements defined in 802.11 bn standard.

Channel scanning is widely used on AP devices for channel quality, such as utilization, noise, neighbors, and can also be used for radar detection. On a high-end AP device, dedicated radio and radio frequency chains are available for channel scanning, whereas most low-end AP devices do not have the dedicated radio and radio frequency chain for scanning. Therefore, the service will be affected if non-channel scanning is performed.

Currently proposed solutions require another AP to perform the scanning. However, the performance of the AP performing the channel scanning will be degraded. In cases where multiple channels need to be scanned, the scanning duration may be long and combined scanning of a target bandwidth cannot be performed.

Furthermore, there is no explicit start time for channel scanning in the solution proposed so far, and therefore it cannot be ensured that all scanning operations are performed simultaneously.

Therefore, the embodiments of the present disclosure provide a solution for communication. In this solution, a first device obtains, from a second device via a first channel, an indication that the second device is to perform channel measurement for a second channel different from the first channel, both the first device and the second device currently operating on the first channel, and there being at least one communication link between the first device and the second device; based on the indication, performing at least one of: performing data transmission to the second device via the second channel during a duration of channel measurement; or performing data transmission to the second device via the first channel after a predetermined time interval; or performing data transmission to the second device using a communication link, among a plurality of communication links between the first device and the second device, that is not used for channel measurement.

In this way, it can be ensured that communication can still be performed over the current channel or other channel during channel measurement, thereby ensuring transmission reliability and predetermined transmission efficiency.

The principles and example embodiments of the present disclosure will be described in detail below with reference to the accompanying drawings.

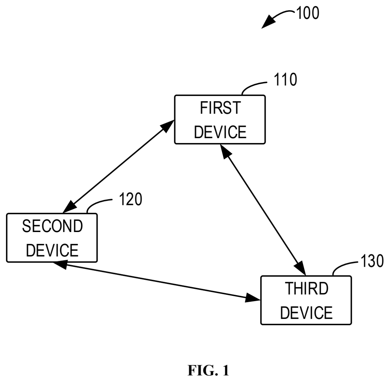

FIG. 1 illustrates a schematic diagram of an example communication network 100 in which example embodiments described herein may be implemented. The communication network 100 may be part of a communication network. In the communication network 100, a first device 110 and a second device 120 are included. The second device 120 may communicate with the first device 110.

In some example embodiments, the first device 110 may include, for example, a wireless router configured to provide wireless network coverage for an indoor environment where the user is located. The wireless router may be a network device compliant with the802.11 family of standards or implemented by any suitable device, such as a Wi-Fi access point (AP). The first device 110 may, for example, communicate with another network device (for example, a base station) to provide wireless network coverage for terminal devices in a specific range, and the scope of the present disclosure is not limited in this respect. The second device 120 may be any access station (STA) or access terminal capable of accessing the wireless network coverage provided by the first device 110.

In some other example embodiments, the first device 110 may also be a STA, and the second device 120 may be an AP. In some further example embodiments, the first device 110 and the second device 120 may both be STAs.

In some embodiments, the AP and the STA may be devices that support multi-link operation (MLO). Such a device is also referred to as a multi-link device (MLD). That is, the AP and the STA described above may perform data transmission via multiple communication links. In this case, the first device 110 may be an AP MLD, and the second device 120 may be a non-AP MLD (Non-AP MLD). Alternatively, the first device 110 may be a Non-AP MLD, and the second device 120 may be an AP MLD.

In some other embodiments, both the first device 110 and the second device 120 may be AP MLD, or both are Non-AP MLDs.

In some example embodiments, where the first device 110 is an AP and the second device is a STA, a link from the first device 110 to the second device 120 may be referred to as a downlink (DL), while a link from the second device 120 to the first device 110 may be referred to as an uplink (UL). In DL, the first device 110 is a transmitting (TX) device (or transmitter), and the second device 120 is a receiving (RX) device (or receiver). In the UL, the second device 120 is a TX device (or transmitter), and the first device 110 is an RX device (or receiver).

Additionally, the communication network 100 may further include a third device 130. Similar to the first device 110 and the second device 120, the third device 130 may be an AP, a STA, an AP MLD, or a Non-AP MLD.

It should be understood that the number of devices and their connections shown in FIG. 1 is merely illustrative and not limiting. The communication network 100 may include any suitable number of devices configured to implement the example embodiments of the present disclosure. Although not shown, it should be understood that one or more other devices may be deployed in the communication network 100.

Communications in the communication network 100 may be implemented in accordance with any suitable communication protocol(s). Examples of communication protocols include, but are not limited to, cellular communication protocols such as the first generation (1G), second generation (2G), 2.5G, 2.75G, third generation (3G), fourth generation (4G), 4.5G, fifth generation (5G), sixth generation (6G), and the like, the wireless local area network communication protocols such as Institute of Electrical and Electronics Engineers (IEEE) 802.11, and/or any other protocols currently known or to be developed in the future.

Further, communications may adopt any suitable wireless communication technologies including, but not limited to: Code Division Multiple Access (CDMA), Frequency Division Multiple Access (FDMA), Time Division Multiple Access (TDMA), Frequency Division Duplex (FDD), Time Division Duplex (TDD), Multiple Input Multiple Output (MIMO), Orthogonal Frequency Division Multiplexing (OFDM), Discrete Fourier Transform-based spread Orthogonal Frequency Division Multiplexing (DFT-s-OFDM), and/or any other technologies currently known or to be developed in the future.

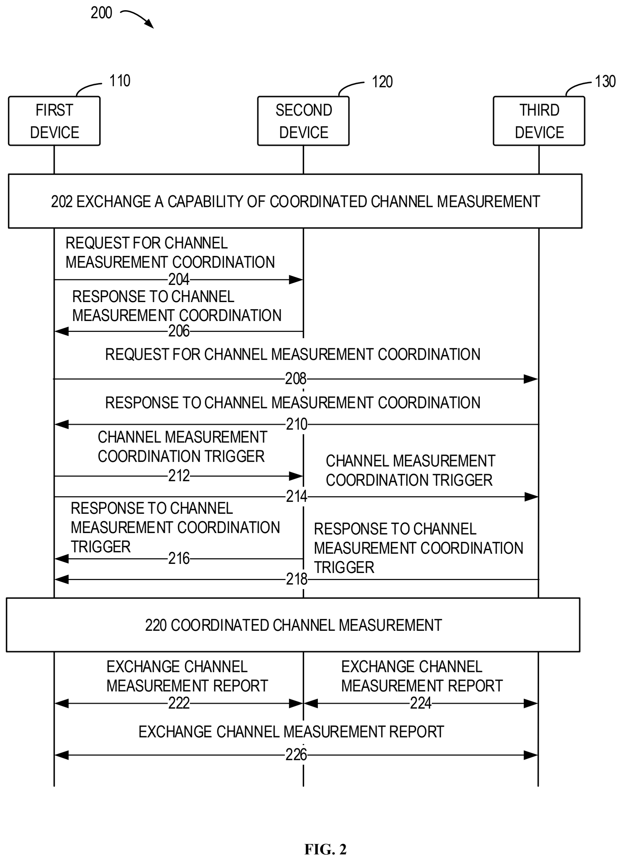

FIG. 2 illustrates a schematic diagram of a communication process 200 according to some example embodiments of the present disclosure. The communication process 200 shown in FIG. 2 may involve, for example, a first device 110, a second device 120, and a third device 130. For the purpose of illustration, the communication process 200 will be described with reference to the example environment shown in FIG. 1.

It should be understood that, during communication, at least a portion of the actions performed at the first device 110 may also be performed at the second device 120 and/or the third device 130. At least a portion of the actions performed at the second device 120 may also be performed at the first device 110 and/or the third device 130.

As shown in FIG. 2, the first device 110, the second device 120, and the third device 130 may exchange (202) with each other whether they have the capability of coordinated channel measurement. In this case, the signaling for exchanging capabilities among the first device 110, the second device 120, and the third device 130 may be referred to as coordinated channel measurement discovery signaling or coordinated channel measurement capability signaling. That is, whether the first device 110, the second device 120, and the third device 130 support coordinated channel measurement may be known through signaling interactions such as beacons, probe requests, and/or probe responses or other management frames.

In this way, the first device 110 may discover devices that support coordinated channel measurement (e.g., the second device 120 and/or the third device 130), for example, by listening for beacons or other management frames with extended 802.11 REVme added with a new capability element type (i.e., coordinated channel measurement).

For example, a new capability element type, i.e., a "Coordinated Channel Measurement Capability Enable" capability element, may be represented at "36" in the management frame with extended 802.11 REVme. If the value of the capability element is "1", it indicates that the AP or STA supports coordinated channel measurement. On the contrary, if the value of the capability element is "0", it indicates that the AP or STA does not support coordinated channel measurement.

In the context of the present disclosure, the term "coordinated channel measurement" may refer to a process in which a plurality of devices perform channel scanning simultaneously on different channels within a target bandwidth for a predetermined time period.

Taking the first device 110 as the device that initiates the coordinated channel measurement as an example, if the first device 110 determines that both the second device 120 and the third device 130 have the capability of coordinated channel measurement, the first device 110, the second device 120, and the third device 130 may initiate a process associated with the coordinated channel measurement.

For example, in 802.11, a new action frame category field (e.g., "value 35") may be extended to support the coordinated channel measurement frame. The coordinated channel measurement frame may be transmitted in a basic service set (BSS) or between BSSs. A BSS may or may not include an AP. The coordinated channel measurement frame may also be transmitted between APs, between an AP and an STA, between an AP MLD and a Non-AP MLD, between AP MLDs, and/or between Non-AP MLDs.

For example, the action field of the coordinated channel measurement may be as follows:

| Coordinated channel measurement action field value | Description |
|---|---|
| 0 | Measurement coordination request |
| 1 | Measurement coordination response |
| 2 | Measurement coordination report |
| 3 | Measurement coordination trigger |
| 5 | Measurement coordination trigger response |
| 6-255 | Reserved |

In the process 200 shown in FIG. 2, the signaling interaction for coordinated channel measurement among the first device 110, the second device 120 and the third device 130 may be performed under the framework of the action field for the coordinated channel measurement illustrated above.

Taking the first device as the device that initiates the coordinated channel measurement as an example, if the first device 110 determines that the second device 120 has the capability of coordinated channel measurement, the first device 110 may transmit (204) a request for channel measurement coordination to the second device 120. The request may at least indicate that the first device 110 expects to perform coordinated channel measurement for a plurality of channels associated with a target bandwidth within a target time period. The first device 110 may operate on a first channel, and the second device may operate on a second channel. The first channel may be the same channel or a different channel as the second channel.

Similarly, if the first device 110 determines that the third device 130 has the capability of coordinated channel measurement, the first device 110 may transmit (206) a request for channel measurement coordination to the third device 130. The request may at least indicate that the first device 110 expects to perform coordinated channel measurement for the plurality of channels associated with the target bandwidth within the target time period. The third device 110 may operate on a third channel. The third channel may be the same channel or a different channel as the first channel and the second channel.

Specifically, the request for channel measurement coordination transmitted by the first device 110 may include, for example, a type, a manner, a start time, a duration, and/or a time interval of the coordinated channel measurement. The request may further include, for example, identities of a plurality of channels associated with the channel measurement, an indication of the target bandwidth, a radio unit identity, a reporting manner of the measurement result, and/or a dialog token between the respective devices.

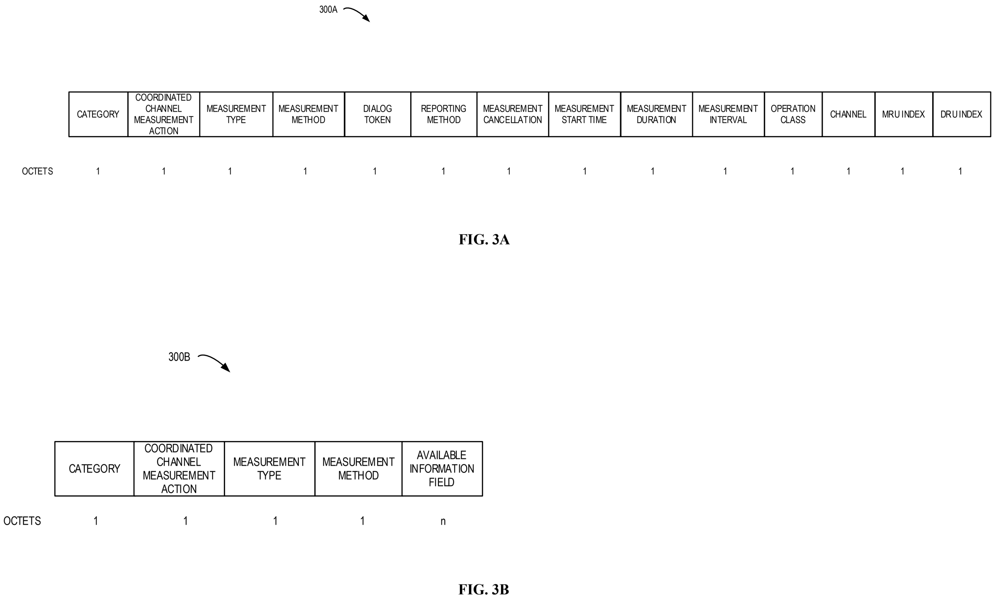

FIG. 3A illustrates a frame format 300A for a request for channel measurement coordination according to some example embodiments of the present disclosure. As shown in FIG. 3A, the request frame for channel measurement coordination may include the following information:
➢ Measurement type: indicates the measurement type definition of a measurement request in 80211 REVme - D6.0 Table 9-136;
➢ Measurement method: 0 indicates a dedicated radio, 1 indicates a dedicated chain, and 2 indicates a partial bandwidth;
➢ Dialog Token: indicates 80211 REVme _ D6.09.4.1.12 Dialog Token field;
➢ Reporting method: 0 indicates reporting only to the requesting node 1 (e.g., the first device 110), and 1 indicates synchronizing the report to all nodes;
➢ Measurement cancellation: 0 indicates a new start measurement, and 1 indicates that the previous measurement request has been cancelled.
➢ Measurement start time: indicates a planned start measurement time (time synchronization function, TSF);
➢ Measurement duration: indicates a planned measurement duration;
➢ Measurement interval: indicates a planned measurement interval, and 0 indicates no interval;
➢ Operation class: indicates a target measurement bandwidth;
➢ Channel: indicates a target measurement channel index;
➢ MRU index: indicates a target measurement MRU index;
➢ DRU index: indicates a target measurement DRU index.

After receiving the request for channel measurement coordination from the first device 110, the second device 120 and/or the third device 130 transmit (206, 210) a response to the request to the first device 110.

In general, the device responding to the request shall transmit a response frame for channel measurement coordination with target available information. If the available information has already been reported to another device, the available information should not be reported to the current device again until the time expires or the receipt of a cancellation request frame from the other device.

FIG. 3B illustrates a frame format 300B of a request for channel measurement coordination according to some example embodiments of the present disclosure. As shown in FIG. 3B, the response frame for channel measurement coordination may include the following information:
➢ Measurement type: indicates the measurement type definition of a measurement request in 80211 REVme _ D6.0 Table 9-136;
➢ Measurement token: a measurement token field is set to a value indicating a measurement token field in a corresponding measurement request frame;
➢ Available Information field: indicates available measurement information per coordinated measurement (scan) request.

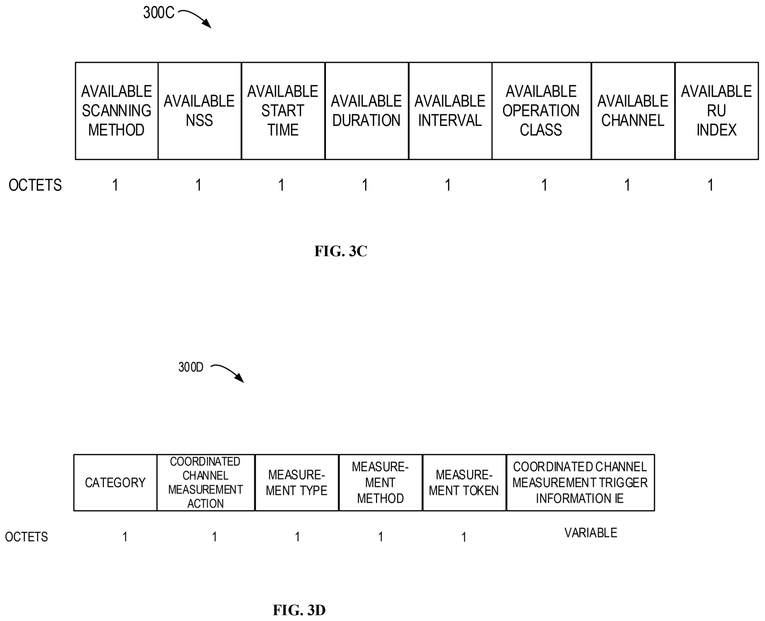

For the available information field, FIG. 3C illustrates an example of information field 300C according to some example embodiments of the present disclosure. As shown in FIG. 3C, the available information field may include the following information:
➢ Available scanning method: indicated by bit masks, where bit 0 indicates a dedicated radio bit, bit 1 indicates a dedicated chain bit, and bit 2 indicates a partial bandwidth;
➢ Available NSS: indicates an available NSS for measurement per measurement request;
➢ Available start time: indicates a measurement available start time (TSF) per measurement request;
➢ Available duration: indicates an available measurement duration per measurement request;
➢ Available interval: indicates an available measurement interval per measurement request;
➢ Available operation class: indicates an available sub-bandwidth for measurement per measurement request;
➢ Available channel: indicates an available channel index for measurement per measurement request;
➢ Available RU index: indicates an available RU index measured per measurement request.

After receiving the response to the request for channel measurement coordination, the first device 110 may trigger a coordinated channel measurement procedure. For example, the first device 110 may transmit (212, 214) trigger information of the coordinated channel measurement to the second device 120 and/or the third device 130. The trigger information at least includes an identity of a device required to report a scanning capability.

For example, the coordinated channel measurement may be triggered via a specific frame transmitted by the first device 110. In some embodiments, the specific frame may be a dedicated trigger frame for coordinated channel measurement. The dedicated trigger frame may be transmitted to the second device 120 and/or the third device 130 via broadcast, multicast, or unicast. Further, in some other embodiments, the specific frame may be an initial control frame defined in 11 bn.

FIG. 3D illustrates a frame format 300D of a trigger for channel measurement coordination according to some example embodiments of the present disclosure. As shown in FIG. 3D, the trigger frame for channel measurement coordination may include the following information:
➢ Measurement type: indicates a measurement type definition of the measurement request in 80211 REVme _ D6.0 Table 9-136;
➢ Measurement token: a measurement token field is set to a value indicating a measurement token field in a corresponding measurement request frame;
➢ Information element (IE) of channel measurement coordination trigger information: indicates trigger information of channel measurement coordination.

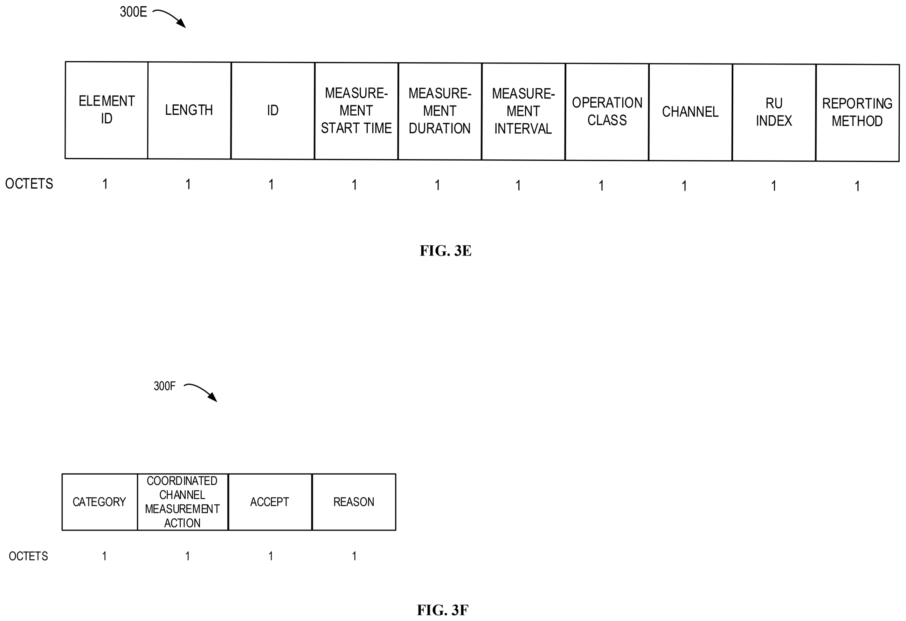

For the measurement coordination trigger information IE, FIG. 3E illustrates an example of information IE 300E according to some example embodiments of the present disclosure. As shown in FIG. 3E, the trigger information may include the following information:
➢ Measurement start time: indicates a start time of measurement (TSF);
➢ Measurement duration: indicates a measurement duration;
➢ Measurement interval: indicates a measurement interval;
➢ Operation class: indicates a measurement sub-bandwidth;
➢ Channel: indicates a measurement channel index;
➢ RU index: indicates a measurement RU index;
➢ ID: a unique identity of a scanning device (for example, the second device 120 or the third device 130) in the network;
➢ Reporting method: indicates the reporting manner of the measurement results, where 0 indicates reporting only to the requesting node 1 (e.g., the first device 110), and 1 indicates synchronizing the report to all nodes.

If the second device 120 and/or the third device 130 accepts the trigger for the coordinated channel measurement, the second device 120 and/or the third device 130 transmits (216, 218) a response to the trigger to the first device 110. The response at least indicates whether the second device 120 and/or the third device 130 accept the trigger for coordinated channel measurement and rejection reason.

FIG. 3F illustrates a frame format 300F of a request for channel measurement coordination according to some example embodiments of the present disclosure. As shown in FIG. 3F, the response frame for responding to the channel measurement coordination trigger may include the following information:
Accept: 0 indicates rejection of the trigger, and 1 indicates acceptance of the trigger;
Reason: indicates the reason of rejection.

For example, a trigger is rejected if available scanning resources are no longer available or occupied by other scanning owners.

In some embodiments, the response frame for responding to the channel measurement coordination trigger may use an initial control response defined in 11 bn.

If the response to the trigger transmitted by the second device 120 and the third device 130 indicates that the second device 120 and the third device 130 accept the trigger for the coordinated channel measurement, the first device 110, the second device 120, and the third device 130 perform (220) the coordinated channel measurement within the target time period, such as the available time period confirmed by both parties in the previous signaling interaction.

During performing the coordinated channel measurement, the first device 110, the second device 120, and the third device 130 may scan the same or different channels in the target bandwidth according to the resources coordinated in previous signaling interactions. Furthermore, the measurement type, manner, start time, duration, and/or time interval, etc., that are confirmed each other in previous signaling interactions shall be followed.

After the coordinated channel measurement is completed, measurement report exchange (222, 224, 226) may be performed between the first device 110 and the second device 120, between the first device 110 and the third device 130, and between the second device 120 and the third device 130. The measurement report may, for example, be transmitted from one node to another node via unicast, groupcast, or broadcast, for example, according to a reporting mode confirmed by each other in previous signaling interactions.

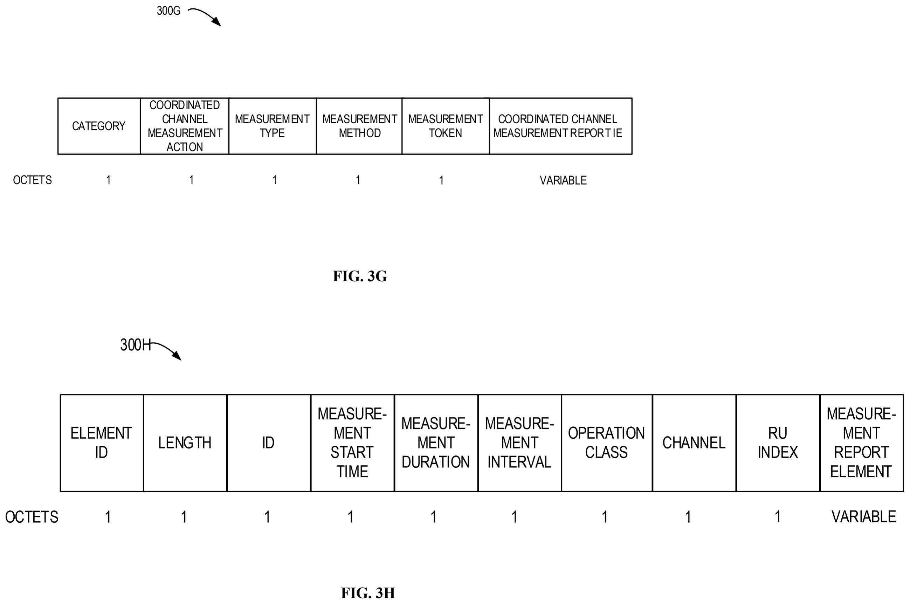

FIG. 3G illustrates a frame format 300G of a measurement report according to some example embodiments of the present disclosure. As shown in FIG. 3G, the measurement report frame may include the following information:
➢ Measurement type: indicates the measurement type definition of a measurement request in 80211 REVme _ D6.0 Table 9-136;
➢ Measurement method: indicates a measurement mode for scanning, where 0 indicates a dedicated radio, 1 indicates a dedicated chain, and 2 indicates a partial bandwidth;
➢ Measurement token: Measurement token field is set to a value of the measurement token field in the corresponding measurement request frame;
➢ coordinated measurement report IE: indicates information of a measurement report.

For the coordinated measurement report IE, FIG. 3H illustrates an example of information IE 300H according to some example embodiments of the present disclosure. As shown in FIG. 3H, the measurement report information may include the following information elements:
➢ Measurement start time: indicates the start time of the measurement (TSF);
➢ Measurement duration: indicates a measurement duration;
➢ Measurement interval: indicates a measurement interval;
➢ Operation class: indicates a measurement sub-bandwidth;
➢ Channel: indicates a measurement channel index;
➢ RU index: Measurement RU index;
➢ Measurement report element: the measurement report element as defined in 80211 REVme _ D6.09.4.2.20.

**It** should be understood that the example frame formats shown above are provided merely for illustrative purposes and are not intended to limit the scope of the present disclosure. Other suitable frame structures or message types should also be considered to fall within the scope of the present disclosure without departing from the spirit of the disclosure.

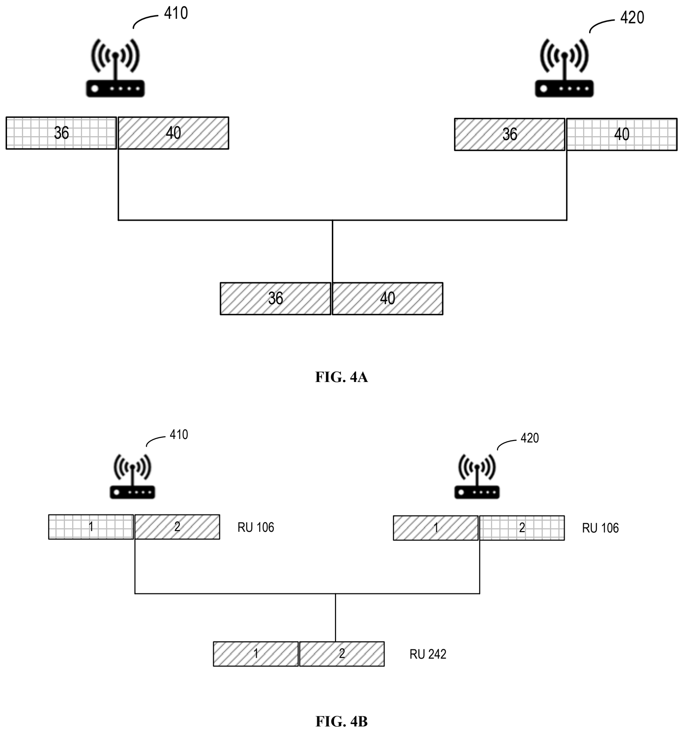

FIGS. 4A and 4B illustrate coordinated measurement scenarios according to some example embodiments of the present disclosure. The example measurement procedure is further described below in connection with FIGS. 4A and 4B.

As shown in FIG. 4A, AP 410 (e.g., the first device 110) may support, for example, 2.4 GHz + 5 GHz + 6 GHz frequency bands, and AP 420 (e.g., the second device 120 or the third device 130) may support, for example, 2.4 GHz + 5 GHz + 6 GHz frequency bands. At 5 GHz, AP 410 operates at 40 MHz, but only has primary channel 36, while AP 420 operates at 40 MHz, but only has secondary channel 40.

When the AP 410 decides to scan at 40 MHz (including channels 36 and 40), the AP 410 transmits a broadcast or multicast coordinated measurement request frame containing target scanning bandwidth information and planned scanning timing. During the planned scanning timing, the AP 420 responds with a coordinated measurement response frame containing available timing, sub-bandwidth, and RU.

When the AP 410 retrieves all available RU and bandwidth information from the responding AP 420, the AP 410 may transmit a coordinated measurement trigger frame (via broadcast, multicast, unicast) or an initial control frame containing coordinated measurement trigger information to initiate a joint scan. After completing the coordinated measurement, the AP 420 transmits a measurement report to the AP 410. Likewise, the AP 410 may also transmit a measurement report to the AP 420. In some embodiments, the AP 410 and the AP 420 may also transmit the measurement report to other nodes via unicast or broadcast according to a reporting mode.

In the process described above, the available sub-bandwidths of different nodes/devices may be used simultaneously for joint scanning. When the joint scanning is performed, the available sub-bandwidths and RUs of the AP 410 and the AP 420 may be scanned simultaneously, thus this is the same as scanning on a single node.

Additionally, the embodiments of the present disclosure also support scanning at the RU level. As shown in FIG. 4B, different available RUs 106 of the AP 410 and the AP 420 may be combined into a target scanning RU 242.

According to the embodiments described above, the solution of the present disclosure enables coordinated/joint channel measurement by multiple nodes for the target bandwidth, thereby meeting the low latency and reliability currently defined in the 802.11 bn standard.

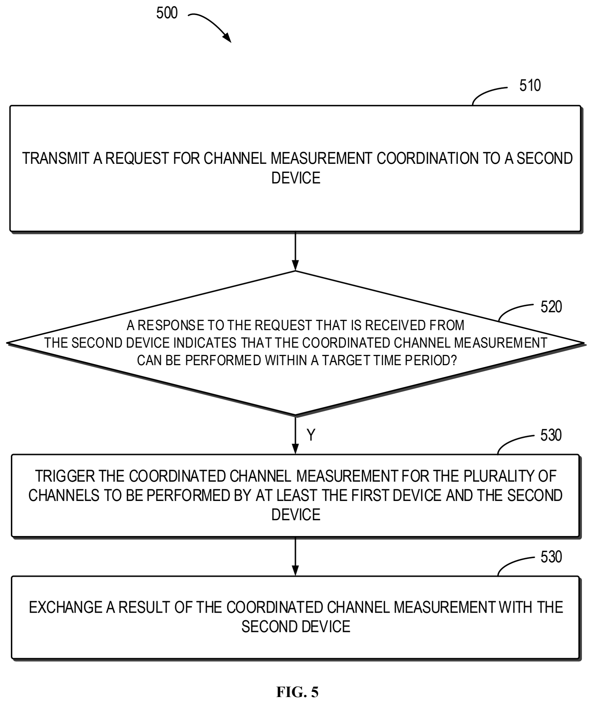

FIG. 5 illustrates a flowchart of a method for communication according to some example embodiments of the present disclosure. The method 500 may be implemented, for example, at the first device 110.

At block 510, the first device transmits a request for channel measurement coordination to a second device, the request at least indicating that the first device expects to perform coordinated channel measurement for a plurality of channels associated with a target bandwidth within a target time period.

At block 520, based on receiving, from the second device, a response to the request indicating that the coordinated channel measurement can be performed within the target time period, the first device triggers, at block 530, the coordinated channel measurement for the plurality of channels to be performed by at least the first device and the second device.

At block 540, the first device exchanges a result of the coordinated channel measurement with the second device.

In some example embodiments, transmitting the request includes: determining whether the second device has a capability to support the coordinated channel measurement based on a probe signal; and based on determining that the second device supports the capability of the coordinated channel measurement, transmitting the request for the channel measurement coordination to the second device.

In some example embodiments, the first device operates on a first channel, the second device operates on a second channel, the first channel and the second channel are the same or different channels, and wherein transmitting the request by the first device includes: based on determining that the plurality of channels associated with the target bandwidth includes the first channel and the second channel, transmitting the request to the second device.

**In** some example embodiments, the request further includes at least one of: a type of the coordinated channel measurement, a manner of the coordinated channel measurement, a start time of the coordinated channel measurement, a duration of the coordinated channel measurement, identities of the plurality of channels associated with the coordinated channel measurement, an indication of the target bandwidth associated with the coordinated channel measurement, a radio unit identity associated with the coordinated channel measurement, a reporting manner of the result of the coordinated channel measurement, a dialog token between respective devices associated with the coordinated channel measurement, a measurement interval associated with the coordinated channel measurement.

In some example embodiments, the coordinated channel measurement is triggered via a specific frame transmitted by the first device, the specific frame includes a dedicated coordinated channel measurement trigger frame or an initial control frame, the dedicated coordinated channel measurement trigger frame is transmitted to the second device via broadcast, multicast, or unicast, and wherein trigger information included in the specific frame includes at least an identity of a device required to report scanning capability.

In some example embodiments, the method 500 further includes receiving a response to the specific frame from the second device, the response indicating at least whether the second device accepts triggering the coordinated channel measurement within the target time period and a rejection reason.

In some example embodiments, the first device operates on a first channel, the second device operates on a second channel, the first channel and the second channel are the same or different channels, and the method 500 further includes: performing channel measurement for the first channel within the target time period based on the coordinated channel measurement being triggered.

In some example embodiments, exchanging the result with the second device includes: transmitting, to the second device, a first measurement result of the channel measurement for the first channel; and receiving, from the second device, a second measurement result of the channel measurement for the second channel.

**In** some example embodiments, the third device operates on a third channel, the third channel, the first channel and the second channel are the same or different channels, and the method further includes: based on determining that the plurality of channels associated with the target bandwidth further includes the third channel, transmitting the request to the third device; based on receiving, from the third device, a response to the request indicating that the coordinated channel measurement can be performed within the target time period, triggering the coordinated channel measurement for the plurality of channels to be performed by the first device, the second device, and the third device.

In some example embodiments, the method 500 further includes exchanging the result of the coordinated channel measurement with the second device and the third device.

In some example embodiments, the first device includes a terminal device or a network device for Wi-Fi communication, and the second device includes a terminal device or a network device for Wi-Fi communication.

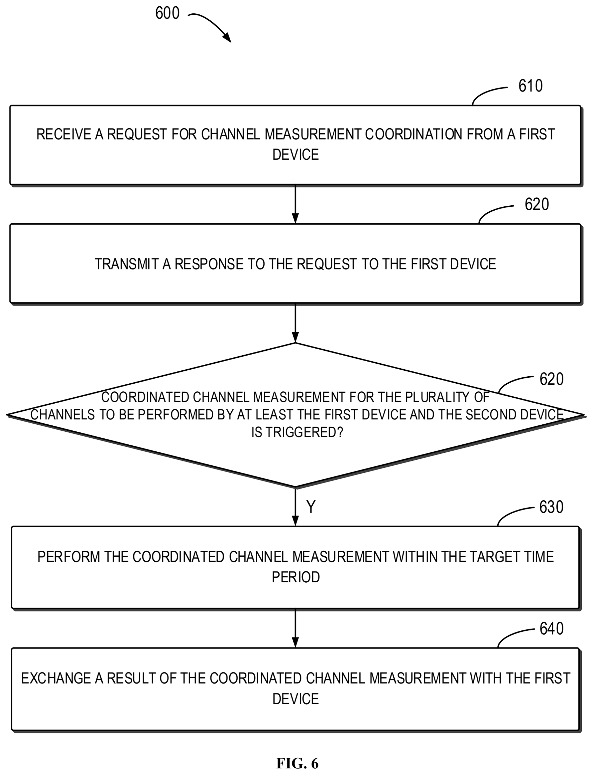

FIG. 6 illustrates a flowchart of a method for communication according to some example embodiments of the present disclosure. The method 600 may, for example, be implemented at the second device 120.

At block 610, the second device receives, from a first device, a request for channel measurement coordination, the request at least indicating that the first device expects to perform coordinated channel measurement for a plurality of channels associated with a target bandwidth within a target time period.

At block 620, the second device transmits a response to the request to the first device, the response indicating that the coordinated channel measurement can be performed within the target time period.

At block 630, based on determining that the coordinated channel measurement for the plurality of channels to be performed by at least the first device and the second device is triggered, the second device performs, at block 640, the coordinated channel measurement within the target time period.

At block 640, the second device a result of the coordinated channel measurement with the first device.

In some example embodiments, the method 600 further includes based on receiving, from the first device, a probe signal for a capability of the second device to perform the coordinated channel measurement, reporting an indication that the second device supports the coordinated channel measurement to the first device.

**In** some example embodiments, the response further includes at least one of: a scanning mode available for the coordinated channel measurement, a start time available for the coordinated channel measurement, a duration available for the coordinated channel measurement, a time interval available for the coordinated channel measurement, identities of the plurality of channels associated with the coordinated channel measurement, an indication of the target bandwidth associated with the coordinated channel measurement, a radio unit identification associated with the coordinated channel measurement.

In some example embodiments, the coordinated channel measurement is triggered via a specific frame transmitted by the first device, the specific frame includes a dedicated coordinated channel measurement trigger frame or an initial control frame, the dedicated coordinated channel measurement trigger frame is transmitted to the second device via broadcast, multicast, or unicast, and wherein trigger information included in the specific frame includes at least an identity of a device required to report scanning capability.

In some example embodiments, the method 600 further includes transmitting, to the first device, a response for the specific frame indicating at least whether the second device accepts triggering the coordinated channel measurement within the target time period and a rejection reason.

In some example embodiments, the first device operates on a first channel, the second device operates on a second channel, the first channel and the second channel are the same or different channels, and the method 600 further includes: performing channel measurement for the second channel within the target time period based on the coordinated channel measurement being triggered.

**In** some example embodiments, exchanging the result with the first device includes: transmitting, to the first device, a second measurement result of the channel measurement for the second channel; and receiving, from the first device, a first measurement result of the channel measurement for the first channel.

In some example embodiments, the third device operates on a third channel, the third channel, the first channel and the second channel are the same or different channels, and the method further includes: based on determining that the coordinated channel measurement within the target time period further relates to the third channel, exchanging the result of the coordinated channel measurement with the third device.

In some example embodiments, the first device includes a terminal device or a network device for Wi-Fi communication, and the second device includes a terminal device or a network device for Wi-Fi communication.

In some example embodiments, an apparatus for communication may include means for performing respective steps of method 500. The means may be implemented in any suitable manner. For example, the means may be implemented as a circuitry or a software module.

The apparatus for communication may include means for transmitting a request for channel measurement coordination to a second device, the request at least indicating that the first device expects to perform coordinated channel measurement for a plurality of channels associated with a target bandwidth within a target time period; means for triggering the coordinated channel measurement for the plurality of channels to be performed by at least the first device and the second device based on receiving, from the second device, a response to the request indicating that the coordinated channel measurement can be performed within the target time period; and means for exchanging a result of the coordinated channel measurement with the second device.

In some example embodiments, an apparatus for communication may include means for performing respective steps of method 600. The means may be implemented in any suitable manner. For example, the means may be implemented as a circuitry or a software module.

The apparatus for communication may include means for receiving a request for channel measurement coordination from a first device, the request at least indicating that the first device expects to perform coordinated channel measurement for a plurality of channels associated with a target bandwidth within a target time period; means for transmitting a response to the request to the first device, the response indicating that the coordinated channel measurement can be performed within the target time period; means for performing the coordinated channel measurement within the target time period based on determining that the coordinated channel measurement for the plurality of channels to be performed by at least the first device and the second device is triggered; and means for exchanging a result of the coordinated channel measurement with the first device.

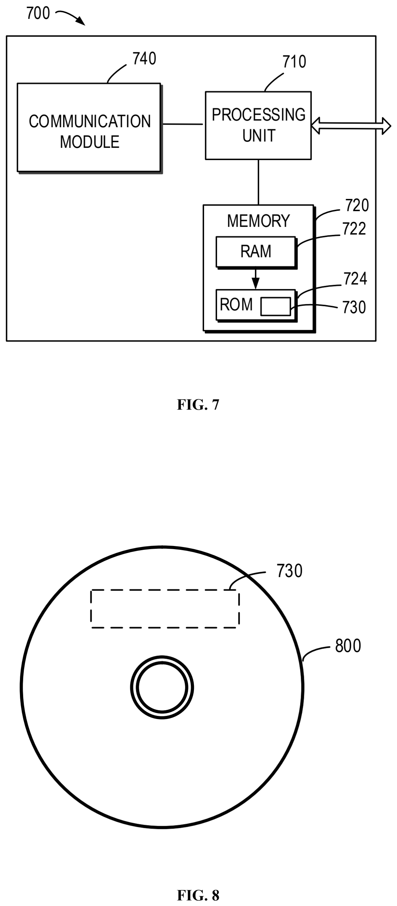

FIG. 7 is a simplified block diagram of a device 700 that is suitable for implementing example embodiments of the present disclosure. The device 700 may be provided to implement the first device 110 and/or the second device 120 in the communication network 100. As shown, the device 700 includes one or more processing units 710, one or more memories 720 coupled to the processing unit 710, and a communication module 740 coupled to the processing unit 710.

The communication module 740 is for bi-directional communication. In some example embodiments, the communication module 740 may have at least one antenna to facilitate communication. In some example embodiments, the communication module 740 may include one or more communication interfaces. The communication interface may represent any interface required to communicate with other network elements.

The processing unit 710 may be of any type suitable for the local technical network and may include, but is not limited to, one or more of a general purpose computer, a special purpose computer, a microcontroller, a digital signal controller (DSP), and a processor based on multicore processor architecture. The device 700 may have multiple processors, such as an application specific integrated circuit chip that is slaved in time to a clock which synchronizes the main processor.

The memory 720 may include one or more non-volatile memories and one or more volatile memories. Examples of non-volatile memories include, but are not limited to, a read-only memory (ROM) 724, an erasable programmable read-only memory (EPROM), a flash memory, a hard disk, a compact disc (CD), a digital video disc (DVD), and other magnetic storage and/or optical storage. Examples of volatile memories include, but are not limited to, a random access memory (RAM) 722 and other volatile memories that will not last in the power-down duration.

The computer program 730 includes computer-executable instructions that are executed by the associated processing unit 710. The computer program 730 may be stored in the ROM 724. The processing unit 710 may perform any suitable action and processing by loading the computer program 730 into the RAM 722.

The example embodiments of the present disclosure may be implemented by means of the computer program 730, so that the device 700 may perform any process of the present disclosure as discussed with reference to FIG. 2 to FIG. 6. The example embodiments of the present disclosure may also be implemented by hardware or by a combination of software and hardware.

In some example embodiments, the computer program 730 may be tangibly embodied in a computer-readable medium, which may be included in the device 700, such as in the memory 720, or other storage devices that are accessible by the device 700. The computer program 730 may be loaded from a computer-readable medium to the RAM 722 for execution. The computer-readable medium may include any types of tangible non-volatile memory, such as ROM, EPROM, flash memory, hard disk, CD, DVD, or the like. FIG. 8 illustrates an example of a computer-readable medium 800 in the form of a CD or DVD according to some example embodiments of the present disclosure. The computer readable medium 800 has the computer program 730 stored thereon.

In general, various embodiments of the present disclosure may be implemented in hardware or special purpose circuits, software, logic, or any combination thereof. Some aspects may be implemented in hardware, while other aspects may be implemented in firmware or software, which may be executed by a controller, microprocessor, or other computing device. Although various aspects of example embodiments of the present disclosure are illustrated and described as block diagrams, flowcharts, or using some other pictorial representation, it should be understood that the blocks, apparatuses, systems, techniques, or methods described herein may be implemented in, as non-limiting examples, hardware, software, firmware, special purpose circuits or logic, general purpose hardware or controller, or other computing device, or some combination thereof.

The present disclosure also provides at least one computer program product tangibly stored on a computer-readable storage medium. In some example embodiments, the computer-readable storage medium may be non-transitory. The computer program product includes computer-executable instructions, such as instructions included in a program module, that are executed in a device on a target physical or virtual processor to perform the method 500 described above with reference to FIG. 5 or the method 600 described with reference to FIG. 6. Generally, program modules include routines, programs, libraries, objects, classes, components, data structures, etc., that perform specific tasks or implement specific abstract data types. In various embodiments, the functionality of program modules may be combined or split between program modules as desired. Machine executable instructions for program modules may be executed within a local or distributed device. In a distributed device, program modules may be located in both local and remote storage media.

Computer program code for carrying out the methods of the present disclosure may be written in one or more programming languages. The computer program code may be provided to a processor of a general purpose computer, special purpose computer, or other programmable data processing apparatus, such that the program code, when executed by a computer or other programmable data processing apparatus, causes the functions/operations specified in the flowchart and/or block diagram to be implemented. The program code may be entirely on a computer, partly on a computer, as a stand-alone software package, partly on a computer and partly on a remote computer or entirely on a remote computer or server.

In the context of the present disclosure, the computer program code or related data may be carried by any suitable carrier to enable a device, apparatus, or processor to perform the various processes and operations described above. Examples of carriers include signals, computer-readable media, and the like. Examples of signals may include electrical, optical, radio, acoustic, or other forms of propagating signals, such as carriers, infrared signals, and the like.

The computer-readable medium may be any tangible medium containing or storing a program for or with respect to an instruction execution system, apparatus, or device. The computer readable medium may be a computer readable signal medium or a computer readable storage medium. The computer-readable media may include, but are not limited to, electronic, magnetic, optical, electromagnetic, infrared, or semiconductor systems, apparatuses, or devices, or any suitable combination thereof. More detailed examples of computer-readable storage medium include electrical connections with one or more wires, a portable computer diskette, a hard disk, a random access memory (RAM), a read-only memory (ROM), an erasable programmable read-only memory (EPROM or Flash memory), an optical storage device, a magnetic storage device, or any suitable combination thereof.

Further, although the operations of the methods of the present disclosure are described in a specific order in the accompanying drawings, this does not require or imply that the operations must be performed in that specific order, or that all of the illustrated operations must be performed to achieve the desired results. Rather, the steps depicted in the flowcharts may change the order of execution. Additionally or alternatively, certain steps may be omitted, multiple steps may be combined into one step for execution, and/or one step may be decomposed into multiple steps for execution. It should also be noted that the features and functions of two or more devices according to the present disclosure may be embodied in one device. Conversely, the features and functions of one device described above may be further divided to be embodied by a plurality of devices.

Although the present disclosure has been described with reference to several specific embodiments, it should be understood that the present disclosure is not limited to the specific embodiments disclosed. The present disclosure is intended to cover various modifications and equivalent arrangements included within the spirit and scope of the appended claims.

## Claims

1. A method for communication, comprising:
transmitting (510), by a first device (110), to a second device (120), a request for channel measurement coordination, the request at least indicating that the first device (110) expects to perform coordinated channel measurement for a plurality of channels associated with a target bandwidth within a target time period;
based on receiving, from the second device (120), a response to the request indicating that the coordinated channel measurement can be performed within the target time period, triggering (530) the coordinated channel measurement for the plurality of channels to be performed by at least the first device (110) and the second device (120); and
exchanging (530) a result of the coordinated channel measurement with the second device (120).

2. The method of claim 1, wherein transmitting (510) the request comprises:
determining whether the second device (120) has a capability to support the coordinated channel measurement based on a probe signal; and
based on determining that the second device (120) supports the capability of the coordinated channel measurement, transmitting the request for the channel measurement coordination to the second device (120).

3. The method of claim 1, wherein the first device (110) operates on a first channel, the second device (120) operates on a second channel, the first channel and the second channel are the same or different channels, and wherein transmitting the request by the first device (110) comprises:
based on determining that the plurality of channels associated with the target bandwidth comprises the first channel and the second channel, transmitting the request to the second device (120)
, wherein for example a third device (130) operates on a third channel, the third channel, the first channel and the second channel are the same or different channels, and the method further comprises:
based on determining that the plurality of channels associated with the target bandwidth further comprises the third channel, transmitting the request to the third device (130);
based on receiving, from the third device (130), a response to the request indicating that the coordinated channel measurement can be performed within the target time period, triggering the coordinated channel measurement for the plurality of channels to be performed by the first device (110), the second device (120), and the third device (130),
wherein for example the method further comprises:
exchanging the result of the coordinated channel measurement with the second device (120) and the third device (130).

4. The method of claim 1, wherein the request further comprises at least one of:
a type of the coordinated channel measurement,
a manner of the coordinated channel measurement,
a start time of the coordinated channel measurement,
a duration of the coordinated channel measurement,
identities of the plurality of channels associated with the coordinated channel measurement,
an indication of the target bandwidth associated with the coordinated channel measurement,
a radio unit identity associated with the coordinated channel measurement,
a reporting manner of the result of the coordinated channel measurement,
a dialog token between respective devices associated with the coordinated channel measurement,
a measurement interval associated with the coordinated channel measurement.

5. The method of claim 1, wherein the coordinated channel measurement is triggered via a specific frame transmitted by the first device (110), the specific frame comprises a dedicated coordinated channel measurement trigger frame or an initial control frame, the dedicated coordinated channel measurement trigger frame is transmitted to the second device via broadcast, multicast, or unicast, and wherein trigger information included in the specific frame comprises at least measurement time information, bandwidth information, channel information, and/or measurement report information for each device required to report scanning capability
, wherein for example the method further comprises:
receiving a response to the specific frame from the second device (120), the response indicating at least whether the second device accepts triggering the coordinated channel measurement within the target time period and a rejection reason.

6. The method of claim 1, wherein the first device (110) operates on a first channel, the second device (120) operates on a second channel, the first channel and the second channel are the same or different channels, and the method further comprises:
performing channel measurement for the first channel within the target time period based on the coordinated channel measurement being triggered
, wherein for example exchanging the result with the second device (120) comprises:
transmitting, to the second device (120), a first measurement result of the channel measurement for the first channel; and
receiving, from the second device (120), a second measurement result of the channel measurement for the second channel.

7. The method of claim 1, wherein the first device (110) comprises a terminal device or a network device for Wi-Fi communication, and the second device (120) comprises a terminal device or a network device for Wi-Fi communication.

8. A method for communication comprising:
receiving (610), by a second device (120), from a first device (110), a request for channel measurement coordination, the request at least indicating that the first device (110) expects to perform coordinated channel measurement for a plurality of channels associated with a target bandwidth within a target time period;
transmitting (620) a response to the request to the first device (110), the response indicating that the coordinated channel measurement can be performed within the target time period;
performing (630) the coordinated channel measurement within the target time period based on determining that the coordinated channel measurement for the plurality of channels to be performed by at least the first device (110) and the second device (120) is triggered; and
exchanging (640) a result of the coordinated channel measurement with the first device (110).

9. The method of claim 8, further comprising:
based on receiving, from the first device (110), a probe signal for a capability of the second device (120) to perform the coordinated channel measurement, reporting an indication that the second device (120) supports the coordinated channel measurement to the first device (110).

10. The method of claim 8 or 9, wherein the response further comprises at least one of:
a scanning mode available for the coordinated channel measurement,
a start time available for the coordinated channel measurement,
a duration available for the coordinated channel measurement,
a time interval available for the coordinated channel measurement,
identities of the plurality of channels associated with the coordinated channel measurement,
an indication of the target bandwidth associated with the coordinated channel measurement,
a radio unit identification associated with the coordinated channel measurement.

11. The method of claim 8, wherein the coordinated channel measurement is triggered via a specific frame transmitted by the first device (110), the specific frame comprises a dedicated coordinated channel measurement trigger frame or an initial control frame, the dedicated coordinated channel measurement trigger frame is transmitted to the second device via broadcast, multicast, or unicast, and wherein trigger information included in the specific frame comprises at least measurement time information, bandwidth information, channel information, and/or measurement report information for each device required to report scanning capability
, wherein for example the method further comprises:
transmitting, to the first device (110), a response for the specific frame indicating at least whether the second device accepts triggering the coordinated channel measurement within the target time period and a rejection reason.

12. The method of claim 8, wherein the first device (110) operates on a first channel, the second device (120) operates on a second channel, the first channel and the second channel are the same or different channels, and the method further comprises:
performing channel measurement for the second channel within the target time period based on the coordinated channel measurement being triggered
, wherein for example exchanging the result with the first device (110) comprises:
transmitting, to the first device (110), a second measurement result of the channel measurement for the second channel; and
receiving, from the first device (110), a first measurement result of the channel measurement for the first channel
, wherein for example a third device (130) operates on a third channel, the third channel, the first channel and the second channel are the same or different channels, and the method further comprises:
based on determining that the coordinated channel measurement within the target time period further relates to the third channel, exchanging the result of the coordinated channel measurement with the third device (130).

13. An apparatus (700) for communication, comprising: at least one processor (710); and at least one memory (720) coupled to the at least one processor (710), the at least one memory (720) comprising instructions (730) stored thereon, the at least one memory (720) and the instructions further configured to, with the at least one processor (10), cause the apparatus (700) to perform the method of any one of claims 1 to 7 or the method of any one of claims 8 to 12.

14. An apparatus for communication, comprising means for performing the method of any one of claims 1 to 7 or the method of any one of claims 8 to 12.

15. A computer-readable storage medium (800) having a computer program (730) stored thereon, the computer program (730) comprising instructions that, when executed by a processor on a device (110, 120), cause the device (110, 120) to perform the method of any one of claims 1 to 7 or the method of any one of claims 8 to 12.
